# EUROPEAN PATENT APPLICATION

(11) **EP 1 457 417 A2**
(43) Date of publication of application: **15.09.2004**
(21) Application number: 04394012.1
(22) Date of filing: 12.03.2004
(51) Int. Cl.: B63B 3/16, B63B 3/56, F16L 11/133

(54) **A hollow plastic article**

(30) Priority: 13.03.2003 IE 20030190
(71) Applicant: Nypro Research and Developments Limited, Bray, County Wicklow (IE)
(72) Inventor: Goggin, James, Nypro Res. & Dev. Ltd., County Wicklow (IE)
(74) Representative: O'Brien, John Augustine

(57) **Abstract**

A moulded plastics article 1 comprises a hollow body with a lower portion 2 and an upper portion 3. In a desired in-use orientation of the article, the lower portion 2 of the body is lowermost and the upper portion 3 is uppermost. The article has an integrally moulded ballast which in this case is in the form of a number of inwardly projecting ribs 10 which extend generally radially from the wall of the lower portion of the hollow body. The ribs 10 are of different lengths, the longer ribs being provided at the lowest section of the body and the radial extent of the ribs decreasing upwardly. The thickness of the outer wall of the hollow body and the thickness of the ribs 10 is substantially the same. Thus the article has substantially uniform wall thickness.

## Description

### Introduction

The invention relates to hollow plastic devices which are designed to take up and maintain a particular orientation in use, for example, to float on top of a liquid with one portion submerged below the surface of a liquid and another portion extending above the liquid surface.

It is known to mould such hollow articles from a plastics material. In general, the articles are moulded with a thicker wall cross section in the region to be submerged below the liquid surface. One such prior art article which in this case is substantially spherical is illustrated in Fig. A.

Conventionally, such known articles are manufactured by injection moulding. The injection moulding process involves heating a plastic resin until it is in a liquid state. It is then injected into a mould. The injection time or fill time for a moulding product is typically less than a second. However, the product cannot be removed from the moulding tool until the plastic has returned to a solid state. To help cool the product water or cooling channels are incorporated into the moulding tool and water is pumped through these channels to remove heat and quicken the solidification of the plastic product. However, even with optimisation of such parameters the cooling element of the cycle time is generally the longest part of the cycle. This is especially a problem with articles of this type with regions of thick wall cross section.

There is therefore a need for a hollow plastic article of this type which can be more readily and speedily moulded.

### Statements of Invention

According to the invention there is provided a hollow plastic article having a desired in-use orientation, the article comprising a hollow body with a lower portion and an upper portion, the hollow article having an outer wall of substantially uniform thickness and the article having an integrally moulded ballast.

In one embodiment the ballast has substantially the same wall thickness as that of the outer wall of the article.

In another embodiment the ballast comprises a rib extending from the wall of the article. Preferably the rib extends inwardly from the lower portion of the hollow article. Most preferably the rib extends generally radially.

In one embodiment the ballast comprises a plurality of ribs.

In another embodiment the ribs are spaced-apart peripherally inside the hollow article.

In a further embodiment at least some of the ribs are of differing length.

In one embodiment the longest rib is provided at the lowest section of the article and the radial extent of the ribs decrease upwardly therefrom.

In one embodiment the hollow body is of generally spherical shape.

In another embodiment the article has integrally moulded ballast ribs which extend generally radially inwardly of the outer wall of the hollow body.

In a further embodiment the article comprises a pair of hemispheres which are moulded separately and subsequently bonded together.

In one embodiment each hemisphere has a lower portion and an upper portion and each hemisphere has an integrally moulded ballast in a lower portion thereof.

According to another aspect of the invention there is provided a process for manufacturing a hollow plastic article having a desired in use orientation, the article comprising a hollow body having a lower portion and an upper portion, comprising the steps of:
providing a mould which is configured to provide a hollow article having an outer wall of substantially uniform thickness and having integrally moulded ballast features, and
injection moulding the article.

In one embodiment the mould is configured such that the ballast features are of uniform thickness. Preferably the mould is configured such that the thickness of the ballast features is the same as the thickness of the outer wall of the article.

In one embodiment the process comprises the step of separately moulding two articles of substantially hemispherical form, each having an upper portion and a lower portion and integrally moulded ballast features, and subsequently bonding them together to form a hollow article of substantially spherical form.

### Brief Description of the Drawings

The invention will be more clearly understood from the following description thereof given by way of example only with reference to the accompanying drawings, in which:-
Fig. A is a cross sectional view of a hollow plastic article of the prior art;

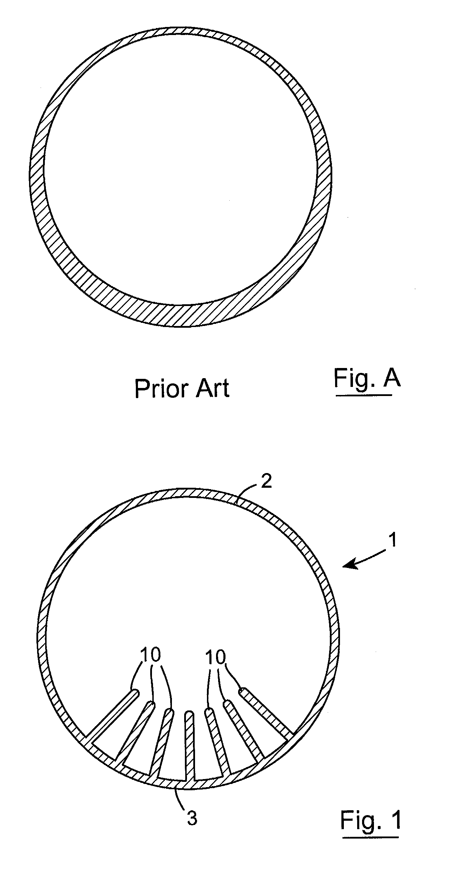

Fig. 1 is a cross sectional view of a hollow plastic article according to the invention;

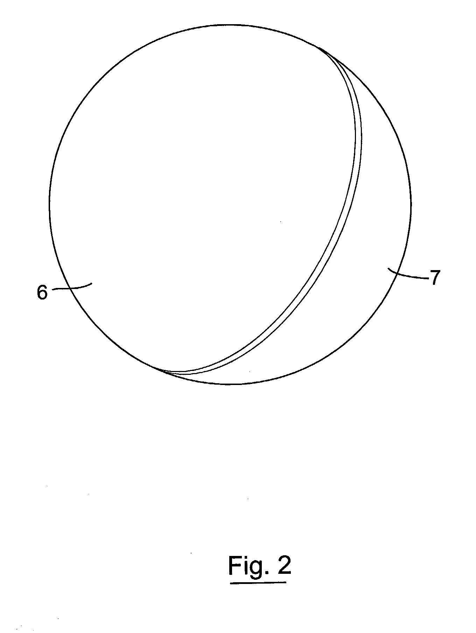

Fig. 2 is a perspective view of the exterior of a hollow plastic article according to the invention;

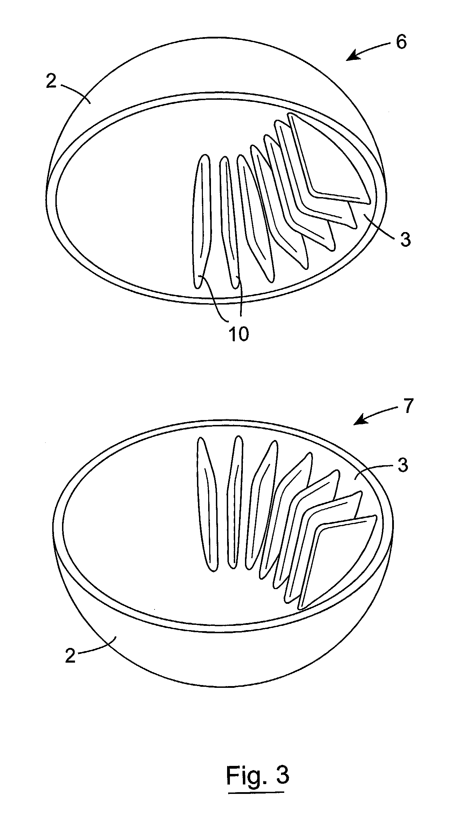

Fig. 3 is a perspective view along the plane section, of the interior, of the article of Fig. 2;

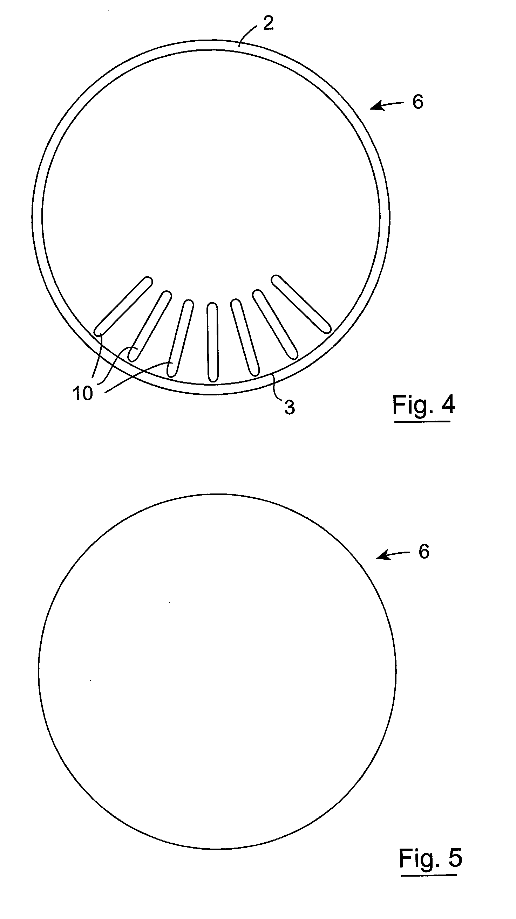

Fig. 4 is a cross sectional view of the article of Fig. 3; and
Fig. 5 is a plan view of the exterior of the article of Fig. 3.

### Detailed Description

Referring to the drawings there is illustrated a moulded plastics article 1 comprising a hollow body which in this case is of generally spherical shape with a lower portion 2 and an upper portion 3. In a desired in-use orientation of the article illustrated, the lower portion 2 of the body is lowermost and the upper portion 3 is uppermost. For example, the article may float on top of a liquid with part of the lower portion submerged below the surface of the liquid and the upper portion extends above the liquid surface.

The article 1 has an integrally moulded ballast which in this case is in the form of a number of inwardly projecting ribs 10 which extend generally radially from the wall of the lower portion of the hollow body. It will be noted that the ribs 10 are of different lengths, the longer ribs being provided at the lowest section of the body and the radial extent of the ribs decreasing upwardly. The ribs 10 are spaced-apart peripherally.

The article 1 is comprised of two hemispheres 6 and 7. The hemispheres 6 and 7 are moulded separately and subsequently bonded together (for example by heat sealing) to form the article 1 having a generally spherical shape. Each of the hemispheres comprises an upper portion 3 and a lower portion 2 and the lower portion 2 of each comprises a plurality of inwardly projecting ribs 10.

The thickness of the outer wall of the hollow body and the thickness of the ribs 10 is substantially the same. Thus the article has substantially uniform wall thickness.

The invention provides the introduction of ballast features which are the same wall thickness as the overall body of the device i.e. uniform. The outer walls and the ballast features of the article being of substantially uniform thickness. The position of these features is important as their position in the device will give the ballast and orientation affect. These features may vary in their shape. The geometry of certain designs may require such features to be made to the outside of the hollow body.

By introducing a uniform wall thickness the device can be designed with a thinner wall section than currently used. Therefore mould cooling time is reduced. If the moulding cooling time is reduced the overall moulding cycle time is reduced and more parts per hour can be produced from the moulding process. This offers a considerable cost saving. More parts per hour can be produced from a moulding tool and machine. Less capital investment (per unit) is required to produce parts of a thinner wall section.

The invention is not limited to the embodiments hereinbefore described which may be varied in detail.

## Claims

1. A hollow plastic article having a desired in-use orientation, the article comprising a hollow body with a lower portion and an upper portion, the hollow article having an outer wall of substantially uniform thickness and the article having an integrally moulded ballast.

2. An article as claimed in claim 1 wherein the ballast has substantially the same wall thickness as that of the outer wall of the article.

3. An article as claimed in claims 1 or 2 wherein the ballast comprises a rib extending from the wall of the article.

4. An article as claimed in claim 3 wherein the rib extends inwardly from the lower portion of the hollow article.

5. An article as claimed in claims 3 or 4 wherein the rib extends generally radially.

6. An article as claimed in any preceding claim wherein the ballast comprises a plurality of ribs.

7. An article as claimed in claim 6 wherein the ribs are spaced-apart peripherally inside the hollow article.

8. An article as claimed in claim 6 or 7 wherein at least some of the ribs are of differing length.

9. An article as claimed in claim 8 wherein longest rib is provided at the lowest section of the article and the radial extent of the ribs decrease upwardly therefrom.

10. An article as claimed in any preceding claim wherein the hollow body is of generally spherical shape.

11. An article as claimed in claim 10 wherein the article has integrally moulded ballast ribs which extend generally radially inwardly of the outer wall of the hollow body.

12. An article as claimed in claims 10 or 11 wherein the article comprises a pair of hemispheres which are moulded separately and subsequently bonded together.

13. An article as claimed in claim 12, wherein each hemisphere has a lower portion and an upper portion and each hemisphere has an integrally moulded ballast in a lower portion thereof.

14. A process for manufacturing a hollow plastic article having a desired in use orientation, the article comprising a hollow body having a lower portion and an upper portion, comprising the steps of:
providing a mould which is configured to provide a hollow article having an outer wall of substantially uniform thickness and having integrally moulded ballast features, and
injection moulding the article.

15. A process as claimed in claim 14 wherein the mould is configured such that the ballast features are of uniform thickness

16. A process as claimed in claim 15 wherein the mould is configured such that the thickness of the ballast features is the same as the thickness of the outer wall of the article.

17. A process as claimed in any of claims 14 to 16, comprising the step of separately moulding two articles of substantially hemispherical form, each having an upper portion and a lower portion and integrally moulded ballast features, and subsequently bonding them together to form a hollow article of substantially spherical form.
